(19) Europäisches Patentamt
European Patent Office
Office européen des brevets

(11) EP 2 767 852 A1

(12) EUROPEAN PATENT APPLICATION

(43) Date of publication:
20.08.2014 Bulletin 2014/34

(51) Int Cl.:
G02B 5/18 (2006.01)          G02F 1/295 (2006.01)
G02F 1/313 (2006.01)

(21) Application number: 12275196.9

(22) Date of filing: 15.02.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: BAE Systems PLC
London SW1Y 5AD (GB)

(72) Inventor: The designation of the inventor has not
yet been filed

(74) Representative: BAE SYSTEMS plc
Group IP Department
Farnborough Aerospace Centre
Farnborough
Hampshire GU14 6YU (GB)

(54) **Display comprising an optical waveguide and switchable diffraction gratings and method of producing the same**

(57)    An apparatus is disclosed for producing an optical display comprising an optical waveguide (1) and a series of diffractive parts (2, 10, 14, 16) for accessing an expanded field of view for the waveguide display. A pair of diffractive parts (2, 14) are arranged to receive and to diffract light to an angle for guided propagation along the optical waveguide, and for output from the optical waveguide. A second pair of switchable diffractive parts (10, 15), are switchable between a diffractive state and a non-diffractive state and are arranged selectively to diffract the light to/from the first pair of diffractive parts to an angle which increases the field of view of the optical waveguide.

Fig. 5

TFOV x3 Output

EP 2 767 852 A1

**Description**

The invention relates to a method and apparatus for providing an optical display such as, but without limitation to, an optical display employing an optical waveguide. In particular, the invention is relevant to a display device in which image-bearing light is injected into the waveguide and is subsequently released from the waveguide for viewing.

Optical waveguides for display devices of this type typically present a field of view (FOV) which is dictated by, and limited according to, the ability of the waveguide to retain light injected into it for propagation along the waveguide by total internal reflection (TIR). If light is injected into the waveguide outside of a particular angular range, then it cannot be retained by TIR for propagation along the waveguide and will simply exit the waveguide without propagating along it.

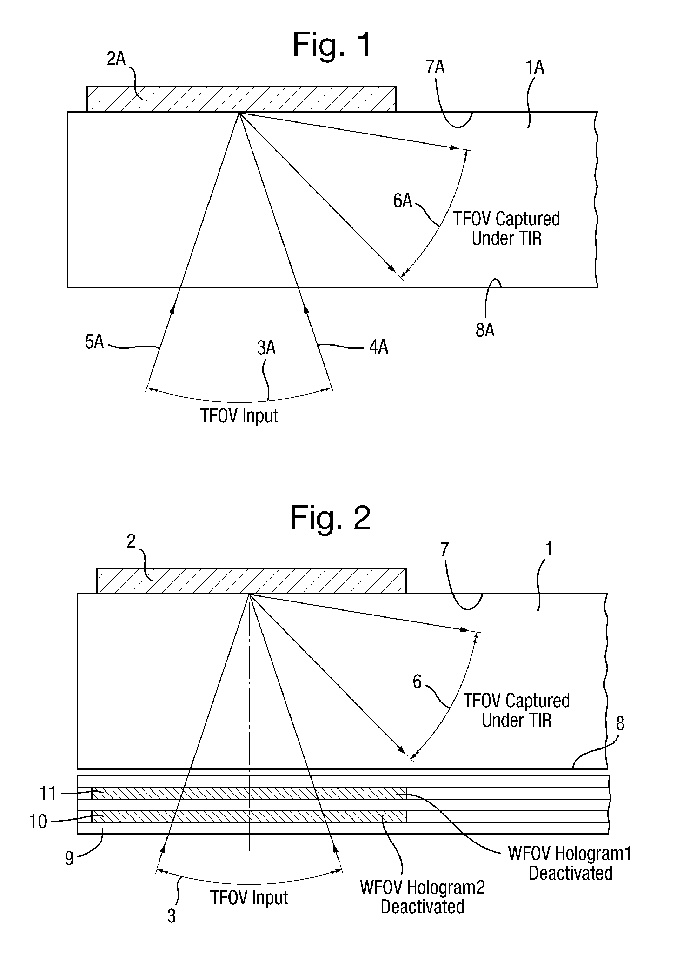

Figure 1 shows schematically an example of a prior art optical waveguide display (1A) upon a rear surface of which is arrange a Bragg grating (2A) arranged to receive light (3A) input through an opposite surface of the waveguide so as to be incident upon a facing surface of the Bragg grating. The structure of the Bragg grating (e.g. grating constant) is such that the received light is diffracted into a diffraction order (usually the first order) to redirect the input light into light (6A) for propagation along the body of the waveguide internally by TIR between opposing internal surfaces (7A, 8A). Only the input end of the waveguide is shown. The refractive index of the material of the optical waveguide (1A) determines the angle of incidence of the diffracted light (6A) which will result in TIR, such that an angle of incidence of light (6A) within the optical waveguide when impinging upon an internal surface (7A, 8A) which is not within the permitted range will not be totally internally reflected. This angular limitation for TIR within the waveguide presents itself as an angular limitation in the total field of view (TFOV) of input light (3A). Extreme angular positions of the TFOV are indicated in Figure 1 (4A and 5A). This total field of view of the input light into the waveguide of the display apparatus is a significant limitation.

The invention aims to address this limitation.

At its most general, the invention is to increase the field of view of a waveguide optical display apparatus, for a display device, that has an input diffractive part for diffracting received light for propagation along the optical waveguide within the input field of view of the apparatus defined by the limits of total internal reflection (TIR) of the waveguide. This is done by employing an additional diffractive part (or a plurality of them) before the input diffractive part that is arranged to receive light from outside the input field of view and to re-direct that light to the input diffractive part to an angle which will result in TIR of that light by the waveguide when it is diffracted by the input diffractive part for propagation along the optical waveguide. Thus, light from outside the field of view of the apparatus can be captured and directed into the input field of view by the additional diffractive part(s). Multiple such additional diffractive parts may be used to capture incoming light for multiple different additional/extra fields of view to extend the field of view of the apparatus piecemeal. The additional field(s) of view may partially overlap in their angular range with the field of view of the input diffractive part, and where there are multiple additional diffractive parts, they may be arranged to provide neighbouring angular fields of view which may overlap partially, to provide continuity. Alternatively, neighbouring fields of view provided by the input diffractive part and additional diffractive parts(s) may be separated to leave a gap in field of view if desired.

In a first aspect, the invention may provide an apparatus for producing an optical display comprising: an optical waveguide; a first switchable diffractive part switchable between a diffractive state and a non-diffractive state and arranged to receive light and selectively to diffract the light to an angle which increases an input field of view of the optical waveguide; a second diffractive part (e.g. an input grating, preferably non-switchable) arranged to receive and to diffract light from the first switchable diffractive part to an angle for guided propagation along the optical waveguide. The input field of view of the waveguide, when considered in isolation, is determined by the properties of the second diffractive part. The angle at which the second diffractive part receives externally input light determines the angle at which it can diffract that input light along the body of the waveguide internally. The well known "grating equation" is an example of this. Only light diffracted into an appropriate range of angles will undergo the TIR necessary for propagation along the waveguide, and only light initially input to the second diffractive part within an appropriate range of input angles will be appropriately diffracted in that way. Thus, an input field of view of the optical waveguide is, for example, the angular range within which the second diffractive part may receive light and diffract that light to an angle appropriate for guided propagation along the optical waveguide. The first switchable grating may receive light falling outside the appropriate input angular range of the second diffractive part, and re-direct it to the second diffractive part within the appropriate angular range. This increases the input field of view of the optical waveguide. The apparatus includes a third diffractive part (e.g. an output grating, preferably non-switchable) optically coupled to the second diffractive part by the optical waveguide and arranged to receive and to diffract light from the second diffractive part to an angle for output from the optical waveguide. The apparatus also has a fourth switchable diffractive part switchable between a diffractive state and a non-diffractive state and arranged to receive and selectively to diffract the light from the third diffractive part to an angle which increases the output field of view of the optical display according to the increased input field of view. The output field of view of the waveguide in isolation is determined by the properties of the third diffractive part. The angle at which the third diffractive part receives internally propagated light determines the angle at which it may diffract that light out from the body of the waveguide for viewing by a user. Once more, the well known "grating equation" is an example of this. Light propagating along the waveguide to the third diffractive part (e.g. output grating) is received within the range of angles appropriate to TIR within the waveguide. This will place limits upon the range of output angles within which internal light may be diffracted out from the waveguide by the third diffractive part. Thus, an output field of view of the optical waveguide is, for example, the angular range within which the second diffractive part may outwardly diffract light received via guided propagation along the optical waveguide. The fourth switchable grating may receive from the third diffractive part, light falling inside an output angular range of the third diffractive part, and re-direct it to a wider angular range corresponding to, or otherwise according to, the increased input field of view. The result is to expand the angular range of light capturable into apparatus, and viewable by a user of the apparatus.

The apparatus may include a fifth switchable diffractive part switchable between a diffractive state and a non-diffractive state and arranged to receive light and selectively to diffract the light to an angle which further increases the input field of view of the optical waveguide wherein the second diffractive part is arranged to receive and to diffract light from the fifth switchable diffractive part to an angle for guided propagation along the optical waveguide, and a sixth switchable diffractive part switchable between a diffractive state and a non-diffractive state and arranged to receive and selectively to diffract the light from the third diffractive part to an angle which further increases the output field of view of the optical display according to the further increased input field of view. As a result, the apparatus may capture multiple different input fields of view with which to expand the input field of view of the waveguide, and output the captured fields in appropriate expanded output angular fields for viewing by a user. The first and fifth switchable diffractive parts may be arranged to expand the angular field of view of the second diffractive part at opposite sides of the angular field of view of the second diffractive part, or on the same side (e.g. that of the second switchable diffractive part abutting, or partially overlapping that of the fifth switchable diffractive part). Similarly, the fourth and sixth switchable diffractive parts may be arranged to expand the angular field of view of the third diffractive part at opposite sides of the angular field of view of the third diffractive part, or on the same side (e.g. that of the fourth switchable diffractive part abutting, or partially overlapping that of the sixth switchable diffractive part).

The switchable diffractive parts are preferably electrically switchable between their diffractive and non-diffractive states, and may be of a known type such as is readily apparent and available to the skilled person. Examples are given below. One, some or each of the switchable diffractive parts may be formed within or upon an optical substrate separate from the optical waveguide. The separate optical substrate may be separated and/or separable from the optical waveguide, and may be attached to or positioned adjacent to the waveguide to place the first, fourth, (and optionally fifth and sixth, when present) switchable diffractive parts in register with the second and third diffractive parts of the waveguide, as appropriate. In this way, existing, legacy optical waveguide display units, comprising the second and third diffractive parts, may be modified by combining them with the separate optical substrate containing the first, fourth, (and optionally fifth and sixth, when present) switchable diffractive parts. One, some or each of the switchable diffractive parts may be formed within or upon the optical waveguide. In this alternative, the switchable and non-switchable diffractive parts may be inseparable parts of one optical unit. By preferably using non-switchable second and third diffractive parts, one reduces the cost of manufacture of the apparatus and also the possible modes for failure (e.g. switching failure) by reducing the number of switchable diffractive parts.

The first switchable diffractive part may at least partially overlap the fifth switchable diffractive part. The fourth switchable diffractive part may at least partially overlap the sixth switchable diffractive part.

The apparatus may include control means arranged to control the first switchable diffractive part and the fourth diffractive part selectively to adopt the same one of the diffractive state and a non-diffractive state concurrently. Thus, the two may act in tandem.

The apparatus may include control means arranged to control the fifth switchable diffractive part and the sixth diffractive part selectively to adopt the same one of the diffractive state and a non-diffractive state concurrently. Thus, the two may act in tandem.

The control means may be arranged to control the fifth switchable diffractive part and the sixth switchable diffractive part selectively to each adopt concurrently the same one of the diffractive state and a non-diffractive state and to control concurrently the first switchable diffractive part and the fourth switchable diffractive part selectively to each adopt concurrently the same other one of the diffractive state and a non-diffractive state. Thus, one pair preferably act when the other pair does not. The control means may be arranged to alternately switch the switchable diffractive parts between the diffractive state and a non-diffractive state cyclically.

The control means may be arranged to switch the switchable diffractive parts cyclically including a condition such that all adopt a non-diffractive state concurrently. In this way, the second and third diffractive parts may act in tandem as the sole pair of diffractive elements - at least momentarily. Consequently, each pair of input/output diffractive parts (switchable or otherwise) is allowed to act in succession to capture a respective angular field of view and offer it for display to a user.

The apparatus may comprise a reflective part, such as a mirror, controllable by the control means to selectively direct light to the first switchable diffractive part (and/or to any fifth and/or sixth switchable diffractive part, and/or any further such switchable diffractive parts) for receipt thereby for input to the optical waveguide. This reflective part may thus act to direct into the first (and fifth, when present) switchable diffractive part, the light from the expanded angular regions of the input field of view.

The first switchable diffractive part may be switchable to comprise a diffraction grating with a grating constant (*d*) arranged to diffract the light of a given wavelength (λ) into a diffraction order (*m, typically m=1*) directed to fall within or coincide with the angular field of view ($\theta_{FoV}$) of the second diffractive part such that

$$d = \frac{m\lambda}{\sin(\theta_{FoV})}$$

In this way, the relevant properties of the first switchable diffractive part may be determined, structured and arranged according to the properties (e.g. grating constant) of the second diffractive part. The light so diffracted by the first switchable diffractive part may be directed onto it (i.e. received by it) within an angular field which at least partly falls outside the angular field of the second diffractive part, or abuts a terminal edge of the latter. This also applies preferably to the properties of the fourth switchable diffractive part relative to those of the third. For example, the fourth switchable diffractive part may be switchable to comprise a diffraction grating with a grating constant (*d*) arranged receive light from the third diffractive part directed to fall within or coincide with the angular field of view ($\theta_{FoV}$) thereof and to diffract the light of a given wavelength (λ) into a diffraction order (*m, typically m=1*) such that

$$d = \frac{m\lambda}{\sin(\theta_{FoV})}.$$

In a second aspect, the invention may provide a method for producing an optical display comprising: providing an optical waveguide; providing a first switchable diffractive part switchable between a diffractive state and a non-diffractive state and therewith receiving light and selectively diffracting the light to an angle which increases the input field of view of the optical waveguide; providing a second diffractive part and therewith receiving and diffracting light from the first switchable diffractive part to an angle for guided propagation along the optical waveguide; providing a third diffractive part optically coupled to the second diffractive part by the optical waveguide and therewith receiving and diffract light from the second diffractive part to an angle for output from the optical waveguide; providing a fourth switchable diffractive part switchable between a diffractive state and a non-diffractive state and therewith receiving and selectively diffracting the light from the third diffractive part to an angle which increases the output field of view of the optical display according to the increased input field of view.

One, some or each of the diffractive parts may comprise a Bragg grating. The first and fourth switchable diffractive parts may be mutually conjugated. That is to say, the order into which the fourth switchable diffractive part diffracts light may be opposite to the order into which the first switchable diffractive part originally diffracted that light before it was received by the fourth switchable diffractive part. The fifth and sixth switchable diffractive parts may be mutually conjugated. The second and third diffractive parts may be mutually conjugated. In this way, input and output diffractive parts may be conjugated in pairs.

Benefits of such conjugation include a reduction in geometric distortions imposed on image-bearing light by diffraction occurring at the first diffractive grating region. The conjugation of the fourth switchable diffractive part would have the effect of, to some extent, imposing geometric distortions in an opposite sense which serve to at least partly reversing the distortions imposed by the first switchable diffractive part. This also applies to the other conjugated pairs of diffractive parts. Chromatic dispersion is also very considerably reduced as a result of conjugation, and in practice is effectively substantially negated/removed. This is especially beneficial when a broadband optical source, such as an LED light source, is employed to generate the light input to the waveguide. As can be seen from the well-known "grating equation" in which the angle of diffraction of light, into a given order of diffraction, is dependent upon the wavelength of that light. A diffracted beam from a broadband optical source may comprise an angular split/dispersion into constituent colours (a rainbow of colours) - particularly undesirable in image-bearing light. Longer wavelengths of light are deviated most by the diffraction into a given non-zero order, and shorter wavelengths less.

Any one, some or all of the switchable diffractive parts may be either optically transmissive or optically reflective.

There now follows a description of an exemplary, but non-limiting, embodiment of the invention for the purposes of illustration with reference to the accompanying drawings of which:

Figure 1 schematically illustrates a cross-sectional view of the input end of an optical waveguide such as a slab optical waveguide;

Figure 2 schematically illustrates in cross-section an input end of an apparatus according to an embodiment of the present invention, including an optical waveguide, such as a slab optical waveguide;

Figure 3 shows the view illustrated in Figure 2 in respect of input light received at an angle different to that at which light is received according to Figure 2, and represents an increase in the field of view of the apparatus;

Figure 4 schematically illustrates the view illustrated in Figures 2 and 3 but in respect of input light impinging upon the apparatus at a yet further different angle of incidence representing a further expansion of the field of view of the apparatus;

Figure 5 schematically illustrates a slab waveguide incorporating the input end illustrated in Figures 2 to 4, and showing the output end of the slab waveguide;

Figure 6 schematically illustrates a combination of a slab waveguide together with a field of view (FOV) expander apparatus in order to provide an apparatus of the type illustrated in Figure 5;

Figure 7 schematically illustrates a sequence of control signals for input to a display apparatus according to an embodiment of the invention;

Figure 8 schematically illustrates fields of view achievable according to embodiments of the invention.

In the drawings like articles are assigned like reference symbols.

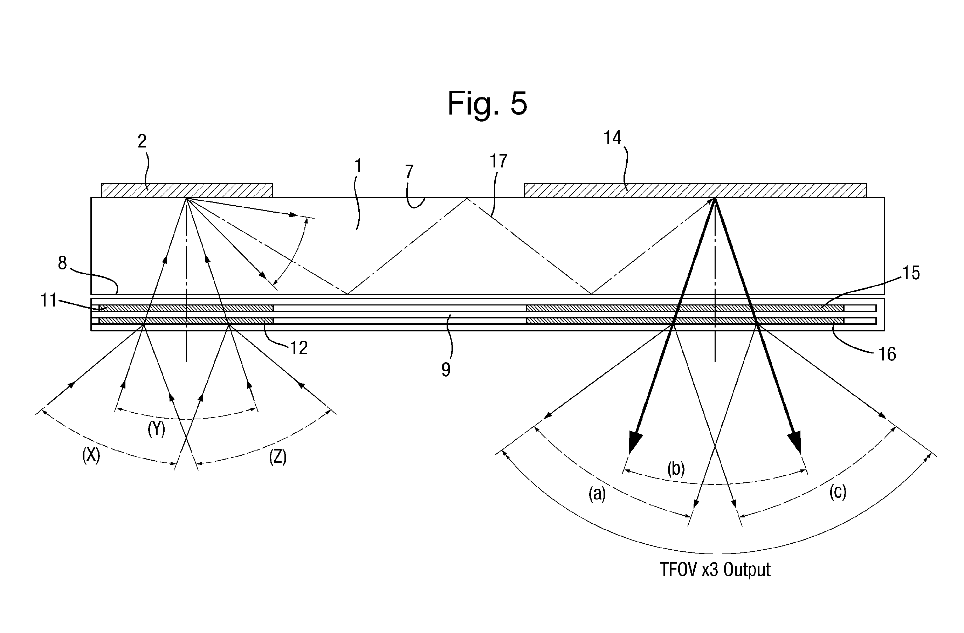

Figure 2 schematically illustrates a cross-sectional view of the in put end of a slab waveguide for a display apparatus according to a preferred embodiment of the invention. The input end illustrated in Figure 2 is shown as part of the complete optical waveguide apparatus illustrated schematically in Figure 5.

The apparatus includes an optical waveguide (1) in the form of a slab waveguide upon a rear surface of which is formed a Bragg grating (2) arranged for diffracting light input to the optical waveguide via an opposing surface (8) of the slab waveguide. The diffractive grating structure of the Bragg grating (2) is arranged such that input light (3) impinging upon the diffractive surface of the Bragg grating is diffracted into a first diffraction order (6) for propagation along the waveguide by total internal reflection (TIR). The angle at which input light is diffracted is determined also by the angle at which it is incident upon the diffractive grating surface of the Bragg grating (2). There exists a range of input angles which result in diffraction of input light into an angle suitable for and capable of being captured within the slab waveguide by total internal reflection (6). This range of extreme input angles defines the total field of view (TFOV) of the input light (3) of the system. Propagation of the captured light (6) within the slab waveguide is supported by successive total internal reflections of the captured light between opposing internal slab surfaces (7, 8).

A field of view expander (9), is arranged in front of the optical input surface (8) of the slab waveguide and comprises a first switchable transmissive diffraction grating (10) fully overlapping and in register with a second and subsequent switchable transmissive diffraction grating (11). Both the first switchable grating (10) and the second switchable grating (11) are of the same size as each other and the same size as the input Bragg grating (2) arranged at the opposite face/side of the slab waveguide. All three diffractive grating structures are arranged in register and in parallel.

Each of the first and second switchable diffraction gratings (10, 11) is electrically switchable between a diffractive state arranged to diffract incoming light (3) and a non-diffractive state in which light received thereby is not diffracted. Both states are transmissive.

Figure 2 illustrates the situation in which both of the first and second switchable diffraction gratings are deactivated and are purely transmissive, and non-diffractive. Consequently, the total field of view (TFOV) in the state illustrated in Figure 2 corresponds to the total field of view (TFOV) were the field of the view expander (9) not present.

A preferred way in which to implement the switchable diffraction gratings, in preferred embodiments of the invention, is described by: Alessandro et al published in OPTICS LETTERS, 15 June 2004, Vol. 29, no. 12, pages 1405-1407. Another preferred way is disclosed in: DigiLens® Light Emitting Diode Condenser (D-LEDC) for Next Generation Digital Projection: White Paper; which is available at:

http://www.digilens.com/white/DigiLens%20-%203D%20Passive%20LED%20Pico-Projector%20-%20White%20Paper.pdf,

or is available from SBG Labs Inc, 1288 of Hammerwood Avenue, Sunnyvale, California 94089, USA.

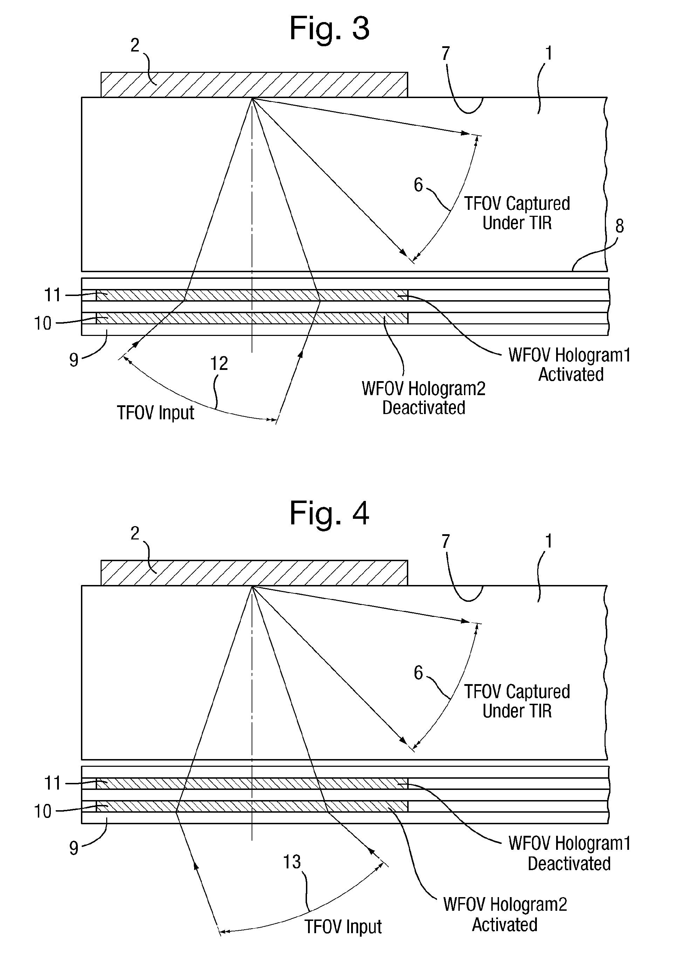

Figure 3 schematically illustrates the state of the apparatus illustrated in Figure 2 in the alternative situation in which the first switchable diffraction grating (10) remains deactivated, whereas the second switchable diffraction grating (11) between the first switchable diffraction grating and the input diffraction grating (2), is in the activated state and has become diffractive. In this diffractive state, it is only light which is input into the second switchable diffraction grating (11) within a second total field of view (12) which is subsequently diffracted by the second switchable diffraction grating to an angle towards the input diffraction grating (2) which results in diffraction by the input diffraction grating into the same captured total field of view (6) within which internal propagation along the slab waveguide is permitted. In this way, while the second switchable diffraction grating remains activated, and the first switchable diffraction grating remains deactivated, the slab waveguide is able to capture and propagate input light originating from a different angular total field of view (12) as compared to the total field of view (3) which would otherwise be captured were both of the first and second switchable diffraction gratings deactivated.

Figure 4 schematically illustrates a similar circumstance in which only the first switchable diffraction grating (10) is activated, whereas the second switchable diffraction grating (11) is deactivated. Similarly, activation of the first switchable diffraction grating (10) in this way, results in the capture of input light incident upon the field of view expander (9) from a third total field of view (13) which is different from either of the first (3) and second (12) total fields of view illustrated in Figures 2 and 3, respectively. Light incident upon the first switchable diffraction grating, when activated, within the third total field of view (13) is diffracted by the first switchable diffraction grating into an angle of incidence upon the input diffraction grating (2) which subsequently results in diffraction of that input light into the captured total field of view (6) of the optical slab waveguide. The light is therefore captured by the optical slab waveguide for propagation along it. Consequently, a third field of view (13), which is different to the first and second fields of view (3,12), is accessed.

By appropriately selecting the activation state of the first and second switchable diffraction gratings (10,11) to be such that one is activated, but not the other, or such that both are deactivated, it is possible to access all three of the total fields of view (3,12,13) selectively. In this sense, the field of view expander (9) expands the total field of view of the apparatus as a whole by virtue of accessing the second and third (12,13) total fields of view by appropriate activation/deactivation of the first and second switchable diffraction gratings as described.

Figure 5 schematically illustrates the waveguide apparatus comprising the optical slab waveguide and field of view expander in full, shown in cross-section. The left-hand half of the schematic illustrated in Figure 5 corresponds to the representations illustrated in Figures 2 to 4 described above.

The waveguide apparatus includes an output diffraction grating (14) comprising a Bragg grating arranged upon the same outer slab surface is that upon which the input grating (2) is arranged. The output grating is so arranged as to receive guided light (17) emanating from the input grating towards the output grating along the body of the slab waveguide internally, by a sequence of TIR events. The output grating has a grating constant and grating structure designed to diffract such received light to an angle for output from the slab waveguide within an angular range (b), for viewing by a viewer.

A third (16) and fourth (15) independently electrically switchable, transmissive diffraction gratings are arranged within the body of the field of view expander (9) in parallel and fully in register with each other and with the output grating (14). Each of the third and fourth switchable diffraction gratings is switchable selectively between a diffractive state in which the grating is arranged to diffract light received from the output grating, and a non-diffractive state in which the grating simply allows the light to pass un-diffracted.

When both of the third and fourth switchable diffraction gratings are switched into the deactivated, non-diffractive state, the light within the unexpanded output angular range (b) that is received by the field of view expander (9) from the output grating (14), passes through the field of view expander with substantially no alteration. However, when the fourth switchable diffraction grating is activated to the diffractive state, the light received thereby from the output grating is diffracted onto a new angular range (c) adjacent to the unexpanded angular range (b). Similarly, when the third switchable diffraction grating is activated to the diffractive state, the light received thereby from the output grating is diffracted onto a new angular range (a) adjacent to the unexpanded angular range (b), but different to the new angular range (c) provided by activation of the fourth switchable grating.

In this way, light input into the captured TFOV (6) of the optical slab waveguide via the first and second switchable gratings (10,11) and the input grating (2) of the waveguide apparatus, may be selectively output to any one of the three output angular ranges (a), (b) and (c) by appropriately controlling the switching of all four switchable diffraction gratings, collectively. Consequently, the expanded input field of view comprising angular ranges (x), (y) and (z) associated, respectively, with: activation of the second switchable diffraction grating (11) alone; with deactivation of both of the first and second switchable diffraction gratings (10, 11) concurrently; or with activation of the first switchable diffraction grating (10) alone, can be viewed in an expanded output (i.e. viewing) field of view by: activation of the third switchable diffraction grating (16) alone; with deactivation of both of the third and fourth switchable diffraction gratings (11, 12) concurrently; or with activation of the fourth switchable diffraction grating (15) alone.

For example, if the second switchable diffraction grating (11) is activated in order to capture the input field of view in the angular range (x), then the third (16) switchable may be concurrently activated to output that captured field into the angular range (c) for the viewer. Both of the first and fourth switchable gratings would be deactivated at that time. Subsequently, or alternatively, if the first switchable diffraction grating (10) is activated in order to capture the input field of view in the angular range (z), then the fourth (15) switchable grating may be concurrently activated to output that captured field into the angular range (a) for the viewer. Both of the second and third switchable gratings would be deactivated at that time. Subsequently, or alternatively, each of the switchable diffraction gratings may be deactivated in order to capture the input field of view in the angular range (y) to output that captured field into the angular range (b) for the viewer. The expanded angular field of view (x+y+z) may thus be captured, as sequentially captured sub-fields of view, and output for viewing by a viewer as an expanded output filed of view (a+b+c).

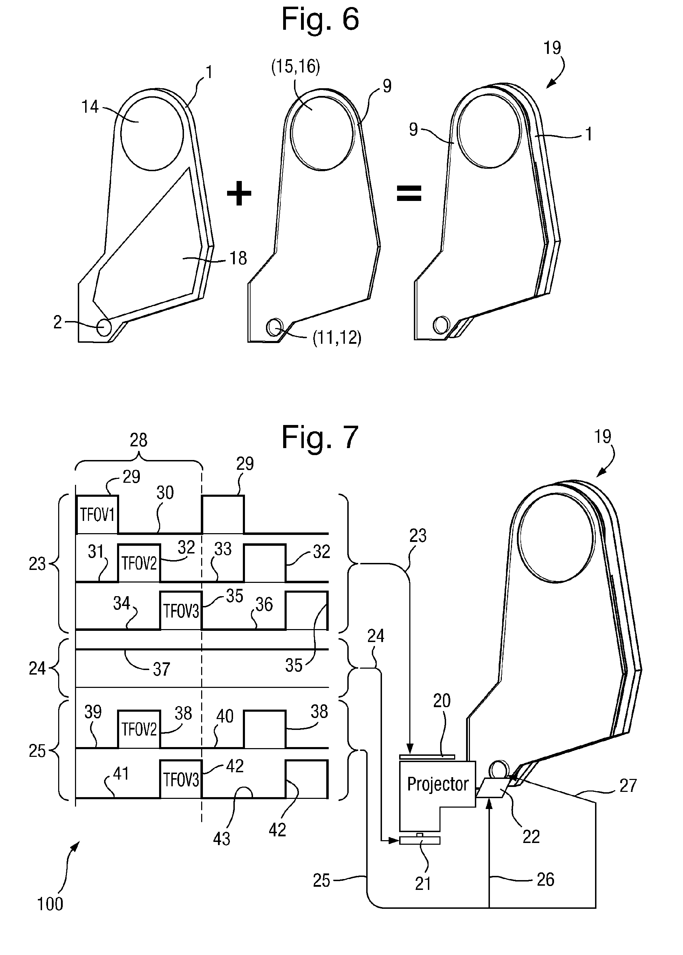

Figure 6 illustrates a slab optical waveguide (1) for a display device combined with a field of view expander (9) in order to provide an apparatus according to the schematic drawing of Figure 5. In this display device the slab waveguide contains three separate areas of the diffraction grating which perform a respective one of three successive functions. A first non-switchable diffractive area (2) serves as a light input grating for diffracting received light along the slab waveguide. A second and intermediate diffractive area (18 - not shown in Figure 5) serves to expand the light from the first area in a first dimension, and a second non-switchable diffractive area (14) serves as the output grating arranged to receive the expanded light and further expand the light in a second dimension orthogonal to the first dimension and to output the result from the waveguide. In particular, the input diffraction grating region (2) is arranged for receiving image-bearing light and for injecting that light into the waveguide (1) by diffraction. This injected light is guided to the intermediate diffractive region (18) where the light is laterally expanded and subsequently guided to the output diffractive region (14) where it is transversely expanded across the output grating to form a visible image which is released from the waveguide for viewing. The input grating and output grating are fixed and non-switchable. The total field of view (TFOV) of the optical waveguide in isolation is fixed.

A field of view expander (9) is provided, having a first and second switchable diffraction gratings (11, 10) matching the shape, size and dimensions of the input grating (2) and a third and fourth switchable diffraction gratings (15, 16) matching the shape, size and dimensions of the output grating (14). Both are formed within a support body (9) which holds the switchable gratings in mutually parallel orientations and at relative positions such that the first and second switchable gratings can be placed in register in front of the input grating (2) of the slab waveguide while simultaneously positioning the third and fourth switchable gratings in register with the output grating (14). This is shown in Figure 6 and results in the apparatus shown in cross-section in Figure 5.

Figure 7 illustrates a display apparatus according to an embodiment of the invention which includes the optical waveguide display and the field of view expander of Figure 6. The display apparatus also includes an image projector (20) unit including an image display panel, such as an LCD display panel and an illumination light source (21) such as an LED for illuminating the display panel. The projector unit, which may be of known type such as would be readily available to the skilled person, comprises optical elements arranged to project the illuminated image generated upon the LCD display screen (20) out of the projector unit and onto a mirror unit (22). The mirror unit is controllable to adopt selectively any one of three positions which will result, respectively, in the mirror inputting light into the first and second co-registered switchable diffraction gratings (10, 11) in a direction corresponding to a respective one of the three different input fields of view (x, y, z) illustrated by Figure 5 and accessible via the first and second switchable gratings. The mirror unit may comprise a mirror element mounted upon a servo motor controllable to rotate/position the mirror switchably and selectively as appropriate.

The control unit (100) is arranged to control the first switchable diffraction grating (10) and the fourth switchable diffraction grating (15) selectively to adopt the same one of either a diffractive state or a non-diffractive state concurrently. The result is to access the expanded field of view represented by the angular range (x) at input and (c) at output.

The control unit (100) is also arranged to control the second switchable diffraction grating (11) and the third switchable diffraction grating (16) selectively to adopt the same one of either a diffractive state or a non-diffractive state concurrently. The result is to access the expanded field of view represented by the angular range (z) at input and (a) at output. Furthermore, the control means is arranged to switch all switchable diffraction gratings cyclically in this way and including a condition such that all adopt a non-diffractive state concurrently - thereby accessing the original field of view (y) at input and (b) at output.

The control unit is arranged to control the first and fourth switchable diffraction gratings selectively to each adopt concurrently the same one of a diffractive state and a non-diffractive state and to control concurrently the second switchable diffraction grating and the third switchable diffraction grating selectively to each adopt concurrently the same other one of the diffractive state and a non-diffractive state. In this way, different fields of view can be accessed by a coordinated switching of the four switchable diffraction gratings. The control unit is arranged to alternately switch the switchable gratings between these diffractive state and a non-diffractive state cyclically, as is shown schematically in Figure 7.

The control unit generates three sets of control signals in use. A first set (23) is input by the control unit into the projector unit and is arranged to control operation of the image display screen (20) of the projector unit. A second set (24) is input by the control unit into the projector unit and is arranged to control operation of the LED illumination source (21). A third set (25) is input by the control unit into the field of view expander (9) and is arranged to control operation of the first, second, third and fourth switchable diffraction gratings and also the switchable mirror unit (22) in the manner described above.

In particular, the first set of control signals comprises three separate pulse sequences each containing regularly temporally spaced activation pulses (29, 32, 35) of a common width and a common separation (30, 31, 33, 34, 36) which is twice their width. In each such pulse sequence, a pulse is present only when none is present in the other two sequences. Whereas, at any time, one pulse is always present from one of the three sequences. For example, a first pulse (29) is present in a first sequence when none is present (31, 34) in the other two concurrent sequences. Then, when the first pulse ends, a subsequent pulse (32) appears in one of the other two sequences, and when this pulse ends (33), a subsequent pulse (35) appears in the third sequence. This ordering of pulses is repeated in successive pulse repetition periods (28) cyclically. The image display screen (20) of the projector unit is responsive to a pulse in each one of the three pulse sequences (23) to display a predetermined image associated with the presence of the given pulse. In this way, three images (e.g. different images) are displayed cyclically, according to the presence of a pulse within a respective pulse sequence (23).

The second set of control signals (24) comprises an illumination control signal (37) to which the illumination source (21) responds by generating light to illuminate the display panel to produce image-bearing light for input to the waveguide display apparatus (19). The magnitude of this signal may be varied to vary the intensity of illumination by the illumination source.

Finally, the third set of control signals (25) is arranged to control operation of the switchable mirror unit and the switchable diffraction gratings concurrently. In particular, the third set of control signals comprises two separate pulse sequences (38, 42) each containing regularly temporally spaced activation pulses (38, 42) of a common width and a common separation (39, 40, 41 and 43) which is twice their width. In each such pulse sequence, a pulse is present only when none is present in the other sequence. For example, a first pulse (38) is present in a first sequence when none is present (41) in the other concurrent sequence. Then, when the first pulse ends, a subsequent pulse (42) appears in the other sequence. It is to be noted that a period exists (39, 41) in which no pulse is present in either sequence - this being the case for a duration of time equal to a that of a pulse width.

This ordering of pulses is repeated in successive pulse repetition periods (28) cyclically. The switchable mirror unit (22) is responsive to receiving (26) a pulse (38) in a first one of the two pulse sequences to reflect projected light from the projector unit into the first switchable diffraction grating (10) in a direction corresponding to the field of view (z) accessible by activation of that grating. The first and fourth switchable gratings are concurrently responsive to receiving (27) the pulse (38) to become activated (diffractive). The switchable mirror unit is also responsive to receiving (26) a pulse subsequently (42) in the second of the two pulse sequences to reflect projected light from the projector unit into the second switchable diffraction grating (11) in a direction corresponding to the field of view (x) accessible by activation of that grating. The second and third switchable gratings are concurrently responsive to receiving (27) the pulse (42) to become activated (diffractive). During the period (39, 41) in which no pulse is present in either sequence, the switchable mirror unit adopts a third orientation in which light from the projector is directed in to the deactivated first and second diffraction gratings at an angle corresponding to the normal field of view (y) of the slab waveguide (1). The third and fourth switchable diffraction gratings are deactivated in the absence of pulses (39, 41) concurrently.

In this way, when a first image is being displayed on the display screen of the projector, the switchable mirror and diffraction gratings are controlled to direct that image for viewing in a first field of view (y), and when subsequently, a second image is being displayed on the display screen of the projector, the switchable mirror and diffraction gratings are controlled to direct that image for viewing in a second (expanded) field of view (x), whereas when the third image is being displayed on the display screen of the projector, the switchable mirror and diffraction gratings are controlled to direct that image for viewing in a third (expanded) field of view (z).

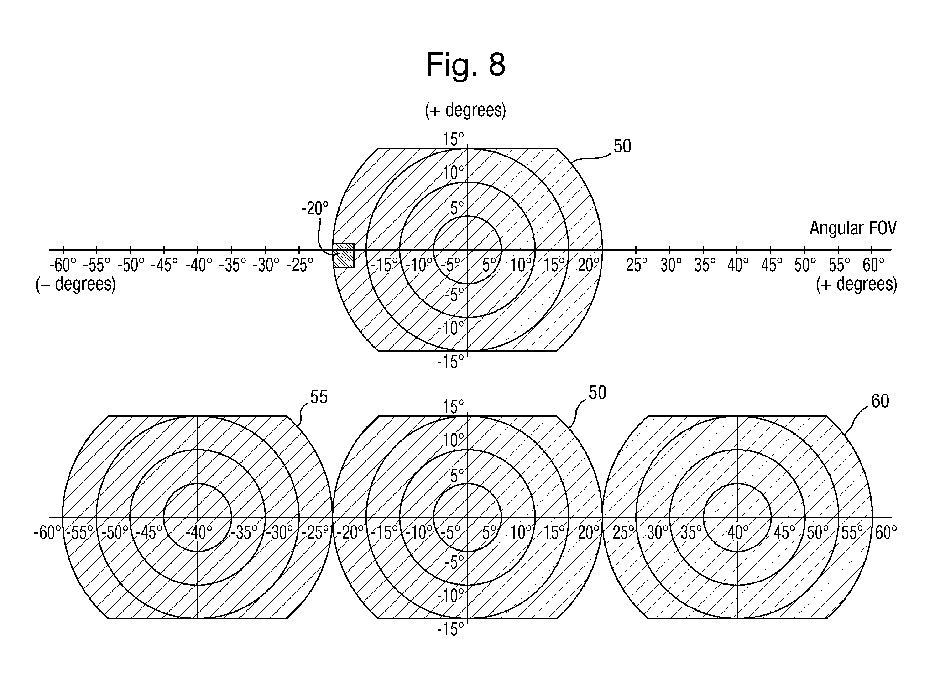

This is repeated cyclically at sufficient speed to appear to the human eye as a continuous display of all three images over the expanded field of view in full. The result is shown in Figure 8 in which the normal (unexpanded) angular field of view (range (y) - see image item 50) visible to a user at the output (14, 15, 16) of the apparatus is shown. Also shown is the expanded field of view visible when the additional angular fields (x, z) are accessed according to the invention (see image items 55 and 60).

It is possible to maximise the expansion of the field of view by selecting the properties of the switchable diffraction gratings according to the angular field of view of the input grating (2) of the slab waveguide as follows. The first and second switchable diffraction gratings may be selected to comprise a diffraction gratings with a grating constant ($d$) arranged to diffract input light of a given wavelength ($\lambda$) into a diffraction order ($m$, typically $m=1$) directed to coincide with the angular field of view (field y, of size $\theta_{FoV}$) of the input diffraction grating (2) such that

$$d = \frac{m\lambda}{\sin(\theta_{FoV})} .$$

The result is that the edge of the input field of view (x, z) accessed by the switchable grating will be contiguous/abut the edge of the normal, unexpended input field of view (y) adjacent to it substantially without overlap or gaps between them. This formula is also applicable to the third and fourth switchable diffraction gratings for receiving light from the output grating (14) and to diffract that received output light into expanded fields of view (a, c) contiguous with the angular field of view (field b, of size $\theta_{FoV}$) thereof and to diffract the light of a given wavelength ($\lambda$) into a diffraction order ($m=1$ here) for viewing.

The embodiments described above are for illustrative purposes and modifications, variants and all equivalents thereto, such as would be readily apparent to the skilled person, are encompassed within the scope of the invention, such as is defined by the claims for example.

**Claims**

1. An apparatus for producing an optical display comprising:

    an optical waveguide;
    a first switchable diffractive part switchable between a diffractive state and a non-diffractive state and arranged to receive light and selectively to diffract the light to an angle which increases an input field of view of the optical waveguide;
    a second diffractive part arranged to receive and to diffract light from the first switchable diffractive part to an angle for guided propagation along the optical waveguide;
    a third diffractive part optically coupled to the second diffractive part by the optical waveguide and arranged to receive and to diffract light from the second diffractive part to an angle for output from the optical waveguide;
    a fourth switchable diffractive part switchable between a diffractive state and a non-diffractive state and arranged to receive and selectively to diffract said light from the third diffractive part to an angle which increases the output field of view of the optical display according to said increased input field of view.

2. An apparatus according to any preceding claim including a fifth switchable diffractive part switchable between a diffractive state and a non-diffractive state and arranged to receive light and selectively to diffract the light to an angle which further increases the input field of view of the optical waveguide wherein the second diffractive part is arranged to receive and to diffract light from the fifth switchable diffractive part to an angle for guided propagation along the optical waveguide, and a sixth switchable diffractive part switchable between a diffractive state and a non-diffractive state and arranged to receive and selectively to diffract said light from the third diffractive part to an angle which further increases the output field of view of the optical display according to said further increased input field of view.

3. An apparatus according to any preceding claim in which one, some or each of said switchable diffractive parts is formed within or upon an optical substrate separate from said optical waveguide.

4. An apparatus according to any preceding claim in which one, some or each of said switchable diffractive parts is formed within or upon said optical waveguide.

5. An apparatus according to clam 2 and any preceding claim dependent upon claim 2, in which the first switchable diffractive part at least partially overlaps the fifth switchable diffractive part.

6. An apparatus according to clam 2 and any preceding claim dependent upon claim 2, in which the fourth switchable diffractive part at least partially overlaps the sixth switchable diffractive part.

7. An apparatus according to any preceding claim including control means arranged to control the first switchable diffractive part and the fourth diffractive part selectively to adopt the same one of said diffractive state and a non-diffractive state concurrently.

8. An apparatus according to clam 2 and any preceding claim dependent upon claim 2, including control means arranged to control the fifth switchable diffractive part and the sixth diffractive part selectively to adopt the same one of said diffractive state and a non-diffractive state concurrently.

9. An apparatus according to claim 8 in which the control means is arranged to control the fifth switchable diffractive part and the sixth switchable diffractive part selectively to each adopt concurrently the same one of said diffractive state and a non-diffractive state and to control concurrently the first switchable diffractive part and the fourth switchable diffractive part selectively to each adopt concurrently the same other one of said diffractive state and a non-diffractive state.

10. An apparatus according to any of claims 7 to 9 in which the control means is arranged to alternately switch said switchable diffractive parts between said diffractive state and a non-diffractive state cyclically.

11. An apparatus according to claim 10 in which the control means is arranged to switch said switchable diffractive parts cyclically including a condition such that all adopt a non-diffractive state concurrently.

12. An apparatus according to any of claims 7 to 11 comprising a reflective part controllable by the control means to selectively direct light to the first switchable diffractive part for receipt thereby for input to the optical waveguide.

13. An apparatus according to any preceding claim in which said first switchable diffractive part is switchable to comprise a diffraction grating with a grating constant (*d*) arranged to diffract said light of a given wavelength (λ) into a diffraction order (*m*) directed to coincide with the angular field of view ($\theta_{FoV}$) of the second diffractive part such that

$$d = \frac{m\lambda}{\sin(\theta_{FoV})}.$$

14. An apparatus according to any preceding claim in which a said fourth switchable diffractive part is switchable to comprise a diffraction grating with a grating constant (*d*) arranged receive light from the third diffractive part directed to coincide with the angular field of view ($\theta_{FoV}$) thereof and to diffract said light of a given wavelength (λ) into a diffraction order (*m*) such that

$$d = \frac{m\lambda}{\sin(\theta_{FoV})}.$$

15. A method for producing an optical display comprising:

  providing an optical waveguide;
  providing a first switchable diffractive part switchable between a diffractive state and a non-diffractive state and therewith receiving light and selectively diffracting the light to an angle which increases an input field of view of the optical waveguide;
  providing a second diffractive part and therewith receiving and diffracting light from the first switchable diffractive part to an angle for guided propagation along the optical waveguide;
  providing a third diffractive part optically coupled to the second diffractive part by the optical waveguide and therewith receiving and diffract light from the second diffractive part to an angle for output from the optical waveguide;
  providing a fourth switchable diffractive part switchable between a diffractive state and a non-diffractive state and therewith receiving and selectively diffracting said light from the third diffractive part to an angle which increases the output field of view of the optical display according to said increased input field of view.

# Fig. 1

2A  7A  1A

6A

TFOV Captured
Under TIR

8A

5A  3A  4A

TFOV Input

# Fig. 2

2  7  1

6

TFOV Captured
Under TIR

8

11
10

9

3  TFOV Input

WFOV Hologram2
Deactivated

WFOV Hologram1
Deactivated

# Fig. 3

TFOV Captured
Under TIR

WFOV Hologram1
Activated

WFOV Hologram2
Deactivated

TFOV Input

# Fig. 4

TFOV Captured
Under TIR

WFOV Hologram1
Deactivated

WFOV Hologram2
Activated

TFOV Input

# Fig. 5

TFOV x3 Output

EP 2 767 852 A1

# Fig. 6

# Fig. 7

# Fig. 8

EP 2 767 852 A1

Europäisches
Patentamt
European
Patent Office
Office européen
des brevets

**EUROPEAN SEARCH REPORT**

Application Number

EP 12 27 5196

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 233 204 B1 (ROBBINS STEVEN J [US] ET AL) 31 July 2012 (2012-07-31)<br>* column 3, line 44 - line 59 *<br>* column 4, line 39 - column 5, line 18 *<br>* column 6, line 19 - line 24 *<br>* figures 3,6-8 *<br>----- | 1-15 | INV.<br>G02B5/18<br>G02F1/295<br>G02F1/313 |
| A | US 2003/063884 A1 (SMITH DUANE D [US] ET AL) 3 April 2003 (2003-04-03)<br>* paragraph [0003] *<br>* paragraph [0169] - paragraph [0175] *<br>* figures 23,24A-24C *<br>----- | 1,15 | |
| | | | **TECHNICAL FIELDS SEARCHED (IPC)**<br>G02B<br>G02F |

The present search report has been drawn up for all claims

| Place of search | Date of completion of the search | Examiner |
|---|---|---|
| Munich | 2 August 2013 | Petitpierre, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 27 5196

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2013

| Patent document cited in search report | | Publication date | Patent family member(s) | | Publication date |
|---|---|---|---|---|---|
| US 8233204 | B1 | 31-07-2012 | NONE | | |
| US 2003063884 | A1 | 03-04-2003 | AU | 2003223457 A1 | 27-10-2003 |
| | | | EP | 1495519 A2 | 12-01-2005 |
| | | | US | 2003063884 A1 | 03-04-2003 |
| | | | WO | 03087876 A2 | 23-10-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ALESSANDRO et al.** *OPTICS LETTERS,* 15 June 2004, vol. 29 (12), 1405-1407